(19) **Europäisches Patentamt**

**European Patent Office**

**Office européen des brevets**

(11) **EP 1 001 558 A2**

(12) **EUROPEAN PATENT APPLICATION**

(43) Date of publication:
**17.05.2000 Bulletin 2000/20**

(51) Int. Cl.[7]: **H04B 7/06**

(21) Application number: **99122264.7**

(22) Date of filing: **08.11.1999**

(84) Designated Contracting States:
**AT BE CH CY DE DK ES FI FR GB GR IE IT LI LU MC NL PT SE**
Designated Extension States:
**AL LT LV MK RO SI**

(30) Priority: **11.11.1998 JP 32075898**

(71) Applicant:
**MATSUSHITA ELECTRIC INDUSTRIAL CO., LTD.**
**Kadoma-shi, Osaka 571-8501 (JP)**

(72) Inventors:
• **Miya, Kazuyuki**
  **Kawasaki-shi, Kanagawa 215-0021 (JP)**
• **Hiramatsu, Katsuhiko**
  **Yokosuka-shi, Kanagawa 239-0831 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Communication terminal apparatus and radio communication method with transmission diversity**

(57) Calculation circuit 201 calculates the difference between the channel estimated value of a known reference signal sent from antenna A of the base station and the channel estimated value of a communication channel signal sent from the antenna of the base station, and the difference between the channel estimated value of a known reference signal sent from antenna B of the base station and the channel estimated value of the communication channel signal sent from antenna of the base station. These differences of channel estimated values are sent to comparison circuit 202 and compared there. This comparison result is sent to determination circuit 203. Determination circuit 203 performs threshold determination on the comparison result. The antenna that sent the communication channel signal is estimated by this threshold determination. Weighting calculation circuit 204 finds weighting factors based on the comparison result and determination result.

FIG. 2

**Description**

BACKGROUND OF THE INVENTION

Field of the Invention

The present invention relates to a communication terminal apparatus and radio communication method used in a radio communication system.

Description of the Related Art

In a radio communication system, a multiple access system refers to a channel access system in which a plurality of stations perform communications using a same band simultaneously. CDMA in this multiple access system refers to Code Division Multiple Access, a technology implementing multiple accesses through spread spectrum communications with the spectrum of an information signal spread over a sufficiently wide band with respect to the original information bandwidth. It is also called "spread spectrum multiple access (SSMA)."

In a CDMA system, Transmit Power Control (hereinafter referred to as "TPC") is generally carried out through a communication channel assigned to each user according to conditions of the transmission path between communicating parties. In CDMA communications, a plurality of communications share a same frequency, which gives rise to a problem (near-far problem) that the power of an interference signal (a communication wave of another station) coincides with the power of a desired signal at the receiving end. Solving this problem is a premise in realizing the CDMA system.

The near-far problem becomes more serious during reception at a base station (uplink) which receives radio signals simultaneously from multiple mobile stations at different places, and therefore it is essential for the mobile stations to carry out TPC according to the conditions of the respective transmission paths. On the other hand, TPC is also carried out on the downlink (channel from a base station to a mobile station) in accordance with the SIR (signal to interference ratio) due to fading variations or interference from peripheral cells.

Furthermore, a channel estimation technology to carry out coherent detection is essential to CDMA. Regarding the channel estimation system, as described in "DS/CDMA Weighted Multi-Symbol Averaging (WMSA) Pilot Channel Characteristics" by Abeta, Ando, Sawabashi, Adachi, et al. (TECHNICAL REPORT OF IEICE RC97-163, 1997-11), two systems are available; a time-division type pilot channel system that inserts a pilot symbol periodically and a parallel pilot channel system that carries out transmission by continuously suppressing power. A conventional method for improving the characteristics of these two channel estimation systems is the Weighted Multi-Symbol Averaging (WMSA) channel estimation system proposed in the document quoted above.

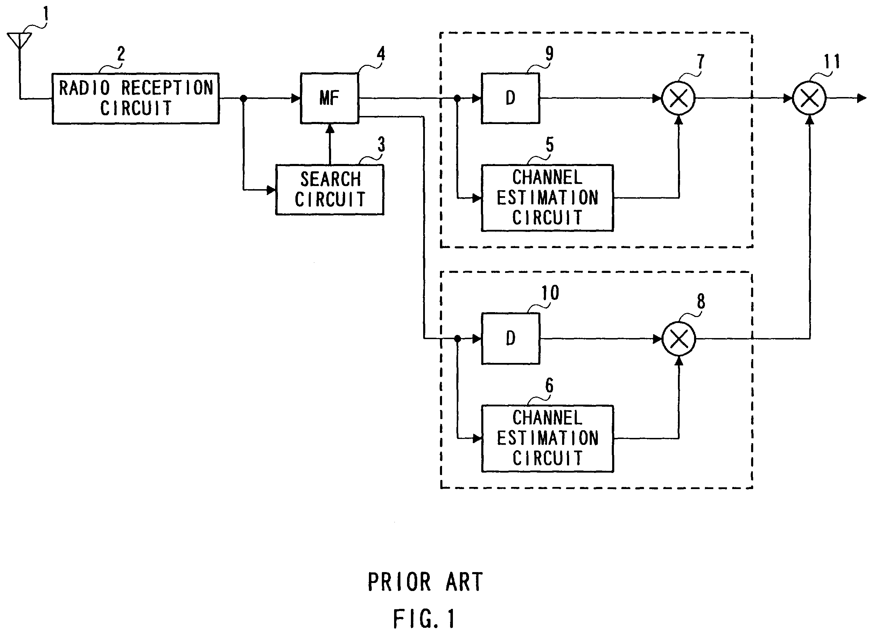

FIG.1 is a block diagram showing a configuration of a receiver comprising channel estimation apparatuses based on a time-multiplexing type pilot channel system. The transmitting side carries out transmission by inserting Np pilot data for every Ns transmit data symbols. On the receiving side, a signal received by antenna 1 is down-converted and demodulated by radio reception circuit 2, then despread by matched filter 4 at a timing detected by search circuit 3.

Pilot symbols are extracted from the despreading signal, their data corresponding to several slots are accumulated and channel estimation is carried out by channel estimation circuits 5 and 6 based on that information. The despreading signal is subjected to coherent detection by coherent detection sections 7 and 8 using estimated values obtained by channel estimation circuits 5 and 6, and with a time delay compensated by delay processing sections 9 and 10, the signals of these paths are combined at a maximum ratio (RAKE combining) in combination section 11.

The channel estimation system is based on the principle as follows: Suppose an estimated value of complex impulse response of the mth symbol of the nth slot of the first branch is given by expression (1) below. The complex impulse response after synchronization addition is expressed in expression (2), and using pilot symbols of a plurality of slots before and after the slot the channel estimated value shown in expression (3) is obtained.

$$\hat{h}_l(n,m) \tag{1}$$

$$\hat{\xi}_l(n) = \frac{1}{N_p} \sum_{m=0}^{N_p-1} \hat{h}_l(n,m) \qquad (2)$$

$$\check{\xi}_l(n) = \sum_{i=-K+1}^{K} \alpha_i \hat{\xi}_l(n+i) \qquad (3)$$

Where, $\alpha_i$ ($\leqq 1$) is a weighting factor. Using estimated values of highly correlated slots before and after the slot makes it possible to improve the accuracy of channel estimation.

However, the conventional system has a problem that if a transmit signal of another channel is sent from a plurality of antennas through diversity transmission, only pilot signals of the self channel are used for channel estimation although the other channel also has pilot signals.

In the case of the time-multiplexing type pilot channel system in particular, if the transmit timing of a pilot signal differs between the self channel and the other channel, although the pilot signal of the other channel contains the channel status information on a section that cannot be obtained from the pilot signal of the self channel, this information is not used for channel estimation.

Furthermore, a CDMA cellular radio communication apparatus is generally equipped with a plurality of demodulation systems (correlators and channel estimation circuits) for soft handover and RAKE combining. Enabling these demodulation systems to be switched according to the situation will make it possible to estimate the channel condition of the other channel without further adding any demodulation systems above.

SUMMARY OF THE INVENTION

It is an objective of the present invention to provide an excellent CDMA radio communication apparatus making it possible to improve the accuracy of channel estimation by carrying out channel estimation using not only pilot signals of the self channel but also pilot signals of other channels through channel estimation apparatuses used in a DS-CDMA radio communication apparatus carrying out coherent detection through channel estimation using pilot signals.

The inventor, et al. came up with the present invention by taking notice of the fact that when transmit signals from other channels including pilot signals are transmitted from a plurality of antennas through diversity transmission, only pilot signals of the self channel are used for channel estimation, and discovering that it would be possible to improve the accuracy of channel estimation by carrying out channel estimation using not only pilot signal of the self channel but also pilot signals of other channels.

This objective is achieved by a communication terminal apparatus comprising a first channel estimation circuit that extracts known reference signals in control channels from signals transmitted from a plurality of antennas, estimates respective channel conditions and obtains a first estimated value; a second channel estimation circuit that estimates the channel condition of a communication channel signal from signals transmitted from a plurality of antennas and obtains a second estimated value; an antenna estimation circuit that estimates the antenna that transmitted the aforementioned communication signal from the aforementioned plurality of antennas using the first and second estimated values above; and a combination circuit that obtains a combined estimated value by combining the first estimated value and second estimated value about the estimated antenna.

BRIEF DESCRIPTION OF THE DRAWINGS

The above and other objects and features of the invention will appear more fully hereinafter from a consideration of the following description taken in connection with the accompanying drawing wherein one example is illustrated by way of example, in which;

FIG.1 is a block diagram showing a configuration of a conventional transmission terminal apparatus (receiver);
FIG.2 is a block diagram showing a configuration of a communication terminal apparatus according to an embodiment of the present invention;
FIG.3 is a block diagram showing a configuration of a transmission antenna estimation circuit of the communication terminal apparatus shown in FIG.2;
FIG.4 is a block diagram showing a configuration of a base station apparatus carrying out a radio communication with the communication terminal apparatus according to Embodiment 1;

FIG.5A~FIG.5C is a diagram showing transmission patterns in a control channel;

FIG.6 is a diagram showing a transmission pattern in a communication channel; and

FIG.7 is a block diagram showing a configuration of a base station apparatus carrying out a radio communication with the communication terminal apparatuses according to Embodiment 2 and Embodiment 3.

DETAILED DESCRIPTION OF THE PREFERRED EMBODIMENTS

With reference now to the attached drawings, the embodiments of the present invention are explained in detail below.

(Embodiment 1)

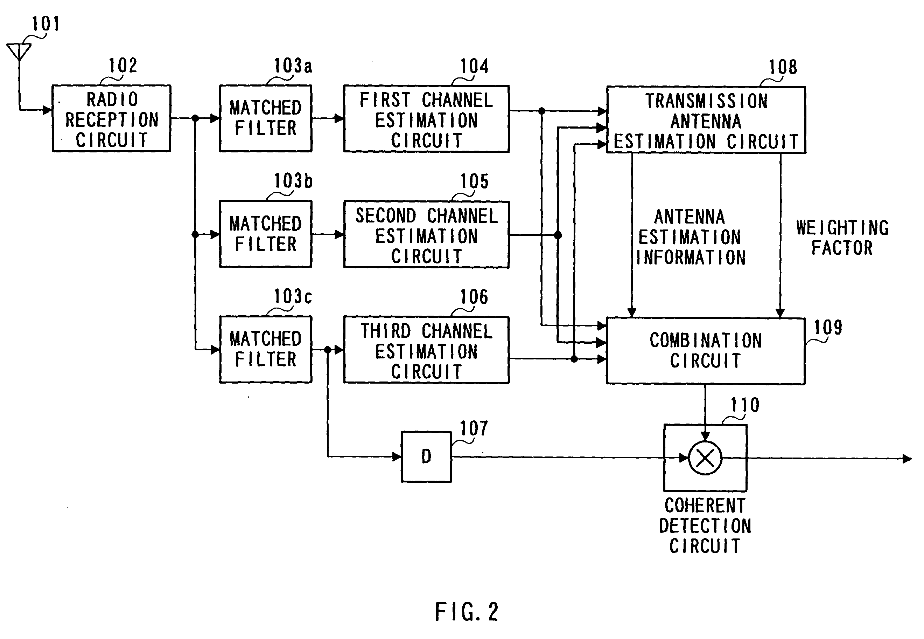

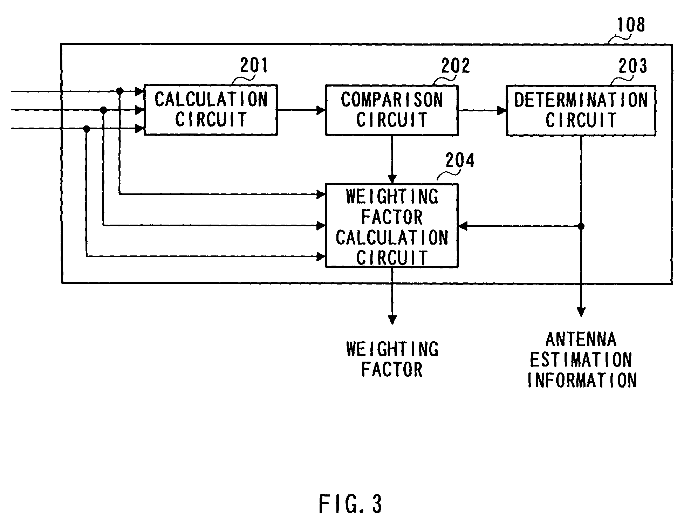

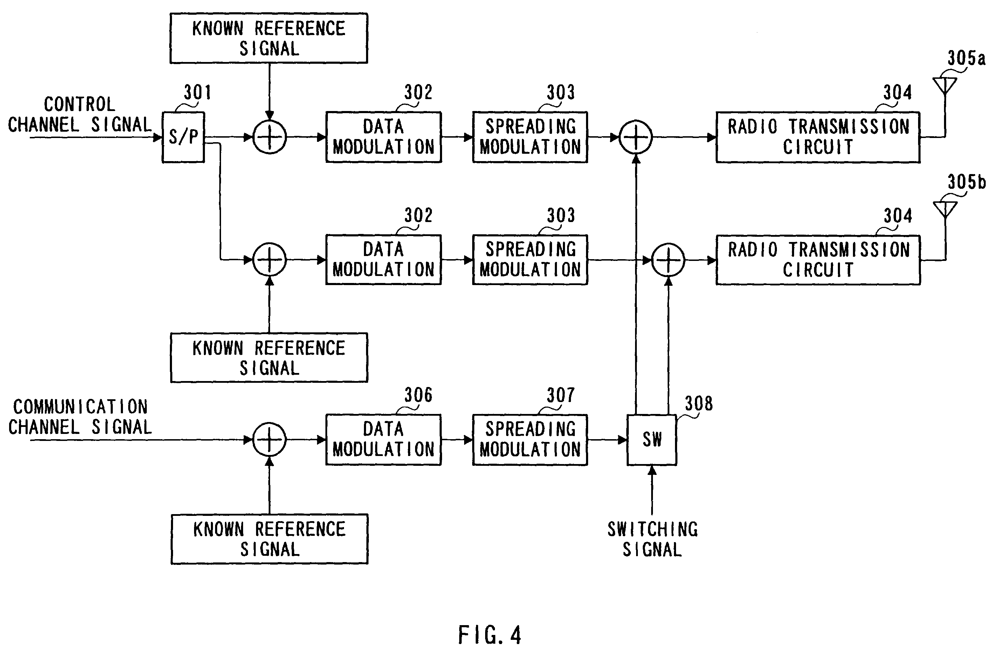

FIG.2 is a block diagram showing a configuration of a transmission terminal apparatus according to an embodiment of the present invention. FIG.3 is a block diagram showing a configuration of a transmission antenna estimation circuit of the communication terminal apparatus shown in FIG.2. FIG.4 is a block diagram showing a configuration of a base station apparatus carrying out a radio communication with the communication terminal apparatus shown in FIG.2. The present embodiment is explained below using FIG.2 to FIG.6.

The present embodiment describes a case using OTD (Orthogonal Transmit Diversity) that transmits a signal converted from serial to parallel from each antenna at a transmission speed reduced to 1/n with a ×n spreading rate.

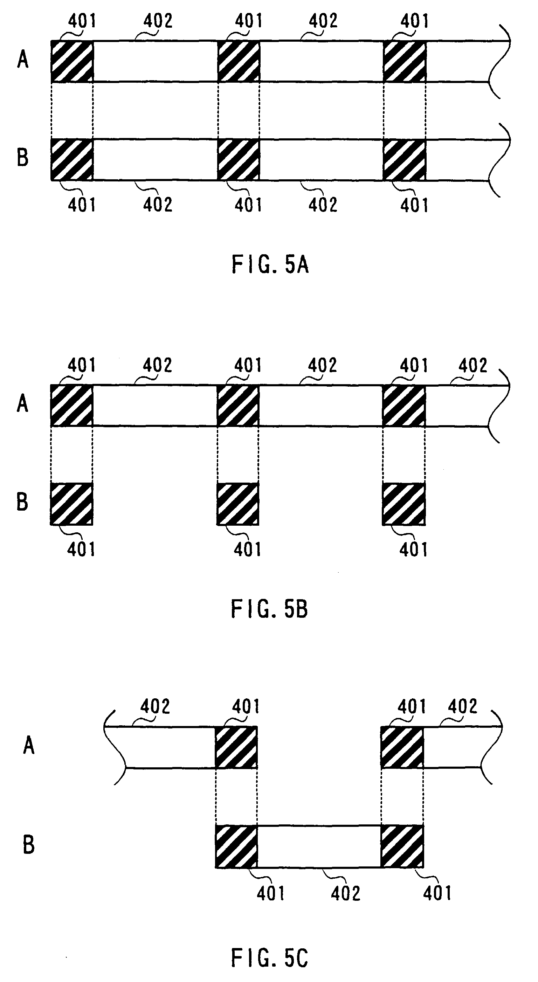

In this case, a control channel signal is transmitted with transmission diversity. For example, a control channel signal is transmitted with a pattern shown in FIG.5A. That is, known reference signals (pilot signals) 401 are sent from all antennas A and B (here 2 antennas) and other control signals 402 are sent in a predetermined cycle or pattern.

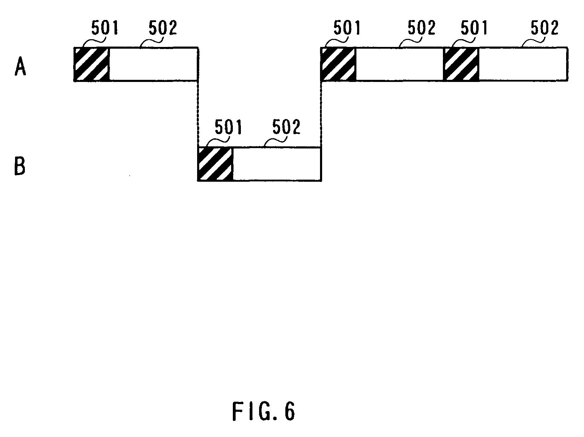

A communication channel signal is sent, for example, in a cycle or pattern as shown in FIG.6. That is, known reference signals (pilot signals) 501 and data 502 are sent alternatively from either antenna A or antenna B. The cycle of switching these antennas can be set as appropriate, for example, on a slot-by-slot basis or on a frame-by-frame basis.

A base station apparatus with a configuration as shown in FIG.4 is used when performing transmission with transmission diversity using the transmission patterns above. In this case, a transmission signal in a control channel is converted from serial to parallel by serial/parallel converter 301 (2 paths here). This reduces the transmission speed from each antenna to 1/2. These signals are each multiplexed with a known reference signal, sent to data modulation circuit 302, modulated by data modulation circuit 302 and spread using a predetermined spreading code by spreading modulation circuit 303. Here, suppose the spreading rate is ×2. The spreading signals are up-converted by radio transmission circuit 304 and transmitted from antennas 305a and 305b.

A communication channel transmission signal is multiplexed with a known reference signal, sent to data modulation circuit 306, modulated by modulation circuit 306 and spread using a predetermined spreading code by spreading modulation circuit 307. The spreading signal is multiplexed with the control signal of either antenna by switch 308 which is switched by a switching signal, up-converted by radio transmission circuit 304 and transmitted from antenna 305a or 305b. The signal transmitted in this way is received by the communication terminal apparatus shown in FIG.2.

In the communication terminal apparatus shown in FIG.2, the signal received from antenna 101 is down-converted and demodulated by radio reception circuit 102 and despread by matched filters 103a and 103b using the spreading code used for spreading on the transmitting side. Matched filter 103a despreads the control channel signal transmitted from antenna 305a of the base station apparatus, while matched filter 103b despreads the control channel signal transmitted from antenna 305b of the base station apparatus and matched filter 103c despreads the communication channel signal transmitted from antenna 305a or 305b of the base station apparatus.

These signals despread by matched filters 103a to 103c are sent to first to third channel estimation circuits 104 to 106, respectively and subjected to channel estimation there and sent to transmission antenna estimation circuit 108. Transmission antenna estimation circuit 108 selects the antenna used for transmission based on the estimation results of channel estimation circuits 104 to 106 and calculates weighting factors for combinations.

Transmission antenna estimation circuit 108 comprises calculation circuit 201 that performs a predetermined operation using the estimation results of first to third channel estimation circuits 104 to 106, comparison circuit 202 that compares the operation results of calculation circuit 201, determination circuit 203 that determines antenna estimation based on the comparison result of comparison circuit 202 and weighting calculation circuit 204 that finds a weighting factor using the estimation results from first to third channel estimation circuits 104 to 106.

The antenna estimation information and weighting factor obtained by transmission antenna estimation circuit 108 are sent to combination circuit 109. Combination circuit 109 combines the channel estimated values of the control channel signal and communication channel signal according to the antenna estimation information and weighting factor. The combined signal is sent to coherent detection circuit 110 and subjected to coherent detection processing with a signal delayed by delay circuit 107 there.

Then, the operation of the communication terminal apparatus with the above configuration is explained.

The reception signals despread by matched filters 103a to 103c are sent to first to third channel estimation circuits 104 to 106, respectively and subjected to channel estimation there. That is, first channel estimation circuit 104 performs channel estimation about the control channel signal sent from antenna 305a of the base station and channel estimation circuit 105 performs channel estimation about the control channel signal sent from antenna 305b of the base station. This channel estimation is performed using known reference signals of several slots. On the other hand, third channel estimation circuit 106 performs channel estimation about the communication channel signal sent from either antenna 305a or 305b of the base station. This channel estimation is also performed using known reference signals of several slots. However, if antenna switching for the communication channel signal is performed for each slot, channel estimation is performed using a known reference signal in one slot.

Here, according to the principle of the channel estimation method, if the despreading signal at the first path of the mth symbol in the nth slot is given by expression (1) above, the channel estimated value of the first path of the nth pilot block can be obtained according to expression (2) above. Channel estimated values are calculated from the phase, amplitude and power, etc. These channel estimated values are sent to calculation circuit 201 of transmission antenna estimation circuit 108.

Calculation circuit 201 calculates the difference between the channel estimated value of the known reference signal sent from antenna 305a of the base station and the channel estimated value of the communication channel signal sent from antenna 305a or 305b of the base station, and the difference between the channel estimated value of the known reference signal sent from antenna 305b of the base station and the channel estimated value of the communication channel signal sent from antenna 305a or 305b of the base station.

These differences of channel estimated values are sent to comparison circuit 202 and compared there. This comparison result is sent to determination circuit 203. If the reliability of the channel estimated value of the communication channel itself is low or the reliability of the channel estimated value of the control channel signal sent from either antenna is low, or if the channel estimated values of both control channel signals have quality equivalent to that of the channel estimated value of the communication channel, it is difficult to determine which antenna sent the communication channel or the reliability of such determination is extremely low, and therefore comparison circuit 203 determines that it is preferable not to combine the channel estimated values and if the comparison result falls below a predetermined threshold comparison circuit 203 does not perform estimation as to which antenna of the base station sent the communication channel.

That is, if the reliability of the channel estimated value of the communication channel itself is low or the reliability of the channel estimated value of the control channel signal sent from either antenna is low, or if the channel estimated values of both control channel signals have quality equivalent to that of the channel estimated value of the communication channel, it is difficult to determine which antenna sent the communication channel or the reliability of such determination is extremely low, and therefore comparison circuit 203 determines that it is preferable not to combine the channel estimated values and does not perform antenna estimation. This makes it possible to not only avoid unnecessary processing and reduce burden to the equipment but also prevent channel estimation performance from contrarily deteriorating by combining the channel estimated values. This information without antenna estimation is sent to combination circuit 109 as antenna estimation information.

On the other hand, if the comparison result exceeds a predetermined threshold in comparison circuit 203, the channel estimated value of the known reference signal sent from either antenna has high quality and it is possible to determine with relatively high reliability which antenna sent the communication channel, and therefore comparison circuit 203 determines that it is preferable not to combine the channel estimated values and estimate the antenna. In this way, estimation is performed for the antenna whose channel quality is estimated to be high, which allows more accurate channel estimation and coherent detection. Information on which antenna was estimated is sent to combination circuit 109 as antenna estimation information.

If the reception levels of both channel estimated values to be compared are small, it is possible to determine that both antennas have channel estimated values with equally poor quality, and therefore it is possible to determine not to perform antenna estimation in this case, either.

The channel estimated value above is sent to weighting calculation circuit 204. Likewise, the comparison result of comparison circuit 202 and the determination result of determination circuit 203 are sent to weighting calculation circuit 204. Weighting calculation circuit 204 makes a soft decision according to the reliability of the channel-estimated value and finds a weighting factor based on the comparison result and determination result.

Since weighting factors are multiplied in this way, it is possible to perform weighting combination of channel estimated values according to the reliability of an channel estimated value and/or the reliability of antenna estimation, making it possible to perform more accurate channel estimation and coherent detection.

Here, the reliability of a channel estimated value can include the rate of the reception level of a known reference signal of a communication channel signal to the reception level of a known reference signal of a control channel signal or the difference between these two, for example. If the rate of the reception level of a known reference signal of a communication channel signal to the reception level of a known reference signal of a control channel signal or the difference between these two is small, for example, the reliability of a channel estimated value of the control channel is small and so is the reliability of antenna estimation as to which antenna sent the communication channel. Weighting factors are obtained according to that reliability. As shown above, if antenna estimation is performed through the determination above, weighting factors are calculated using the channel estimated values and comparison results. These weighting factors are sent to combination circuit 109.

Combination circuit 109 combines channel estimation values according to the antenna estimation information and weighting factors from transmission antenna estimation circuit 108. That is, combination circuit 109 combines the channel estimated value of the known reference signal sent from antenna 305a and the channel estimated value of the communication channel signal sent from antenna 305a and antenna 305b by multiplying these estimated values by the weighting factor, or combines the channel estimated value of the known reference signal sent from antenna 305b and the channel estimated value of the communication channel signal sent from antenna 305a and antenna 305b by multiplying these estimated values by the weighting factor.

In this case, suppose the channel estimated value of the control channel signal is $\zeta l(n)control$, the channel estimated value of the communication channel signal is $\zeta l(n)user$ and the weighting factor is $\alpha$, then output 206 after the combination is given by expression (4) below:

$$\zeta l(n) = \alpha \times \zeta l(n)control + \zeta l(n)user \tag{4}$$

Using the combined estimated value obtained above, the despreading signal is compensated for its time delay in delay processing section 107 and then subjected to coherent detection by coherent detection circuit 110.

As shown above, when the base station equipped with a plurality of antennas carries out transmission diversity in such a way that control channel signals are sent from all antennas and a communication channel signal is sent from a selected antenna, the base station combines the channel estimated value of the control channel signal and the channel estimated value of the communication channel signal after estimating a transmission antenna, improving thus the channel estimation performance. This makes it possible to improve the coherent detection performance in the communication terminal apparatus.

(Embodiment 2)

The present embodiment describes a case where the transmitting side (base station) transmits control channel signals in a pattern shown in FIG.5B with transmission diversity. In the transmission pattern shown in FIG.5B, control signals 402 are transmitted from specific antenna A.

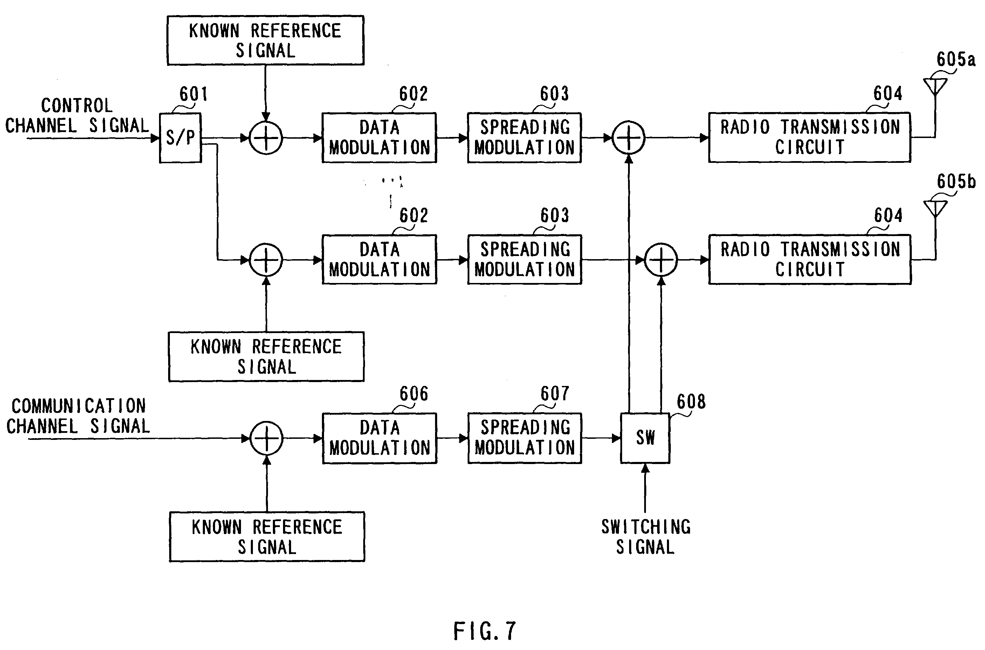

When transmission is performed using the transmission patterns above with transmission diversity, a base station apparatus with a configuration shown in FIG.7 is used. In this case, a transmission signal in a control channel is switched by switch 601 and transmitted. That is, transmission is performed with the line on the antenna 605a side always connected and by switching the line on the antenna 605b side (here two lines). These signals are multiplexed with a known reference signal, sent to data modulation circuit 602, modulated by data modulation circuit 602 and spread by spreading modulation circuit 603 using a predetermined spreading code. The spreading signals are un-converted by radio transmission circuit 604 and transmitted from antennas 605a and 605b.

A communication channel transmission signal is multiplexed with a known reference signal, sent to data modulation circuit 606, modulated by modulation circuit 606 and spread using a predetermined spreading code by spreading modulation circuit 607. The spreading signal is multiplexed with the control signal of either antenna by switch 608 which is switched by a switching signal, up-converted by radio transmission circuit 604 and transmitted from antenna 605a or 605b. The communication terminal apparatus shown in FIG. 2 receives these signals transmitted in this way.

The processing of the communication terminal apparatus shown in FIG.2 is the same as that in Embodiment 1. As shown above, when the base station equipped with a plurality of antennas carries out transmission diversity in such a way that control channel signals are sent from all antennas and a communication channel signal is sent from a selected antenna, the base station combines the channel estimated value of the control channel signal and the channel estimated value of the communication channel signal after estimating a transmission antenna, improving thus the channel estimation performance. This makes it possible to improve the coherent detection performance in the communication terminal apparatus.

(Embodiment 3)

The present embodiment describes a case where the transmitting side (base station) transmits control channel signals in a pattern shown in FIG.5C with transmission diversity. In the transmission pattern shown in FIG.5C, control signals 402 are alternatively transmitted from antenna A or antenna B in a predetermined cycle or pattern.

When transmission is performed using the transmission pattern above with transmission diversity, a base station apparatus with the configuration as shown in FIG.7 is used. In this case, transmission signals in a control channel are switched by switch 601 and transmitted. That is, transmission is performed by switching the line on the antenna 605a side and the line on the antenna 605b side(here two lines). These signals are multiplexed with a known reference signal, sent to data modulation circuit 602, modulated by data modulation circuit 602 and spread by spreading modulation circuit 603 using a predetermined spreading code. The spreading signals are un-converted by radio transmission circuit 604 and transmitted from antennas 605a and 605b.

A communication channel transmission signal is multiplexed with a known reference signal, sent to data modulation circuit 606, modulated by modulation circuit 606 and spread using a predetermined spreading code by spreading modulation circuit 607. The spreading signal is multiplexed with a control signal of either antenna by switch 608 which is switched by a switching signal, up-converted by radio transmission circuit 604 and transmitted from antenna 605a or 605b. The communication terminal apparatus shown in FIG.2 receives these signals transmitted in this way.

The processing of the communication terminal apparatus shown in FIG.2 is the same as that in Embodiment 1. As shown above, when the base station equipped with a plurality of antennas carries out transmission diversity in such a way that control channel signals are sent from all antennas and a communication channel signal is sent from a selected antenna, the base station combines the channel estimated value of the control channel signal and the channel estimated value of the communication channel signal after estimating a transmission antenna, improving thus the channel estimation performance. This makes it possible to improve the coherent detection performance in the communication terminal apparatus.

The transmission patterns in the above embodiments illustrate cases where known reference signals 401 are sent from all antennas A and B simultaneously, but the present invention is also applicable to a case where known reference signals 401 are sent from all antennas A and B at different timings.

The above embodiments describe cases where there are two antennas that carry out transmission diversity, but the present invention is also applicable to cases where there are three or more antennas that carry out transmission diversity.

When transmitting communication channel signals, in addition to the method of switching transmission antennas in a predetermined cycle or pattern as described above, there are also other methods of switching transmission antennas; a method by receiving and following a control signal requesting for the switching of antennas from the communication terminal apparatus or a method of autonomously switching transmission antennas by comparing the reception quality of the above channels, and so on. The present invention is applicable to any of these methods.

Especially, the method of switching transmission antennas by receiving and following a control signal requesting for the switching of antennas from the communication terminal apparatus can prevent combination errors (errors in combining with channel estimated value of control channel of a wrong antenna) caused by erroneous switching of transmission antennas on the base station side due to control signal transmission errors, compared to the case of combining channel estimated values with only antenna estimation control signals. This makes it possible to not only perform more accurate antenna estimation but also perform more accurate channel estimation and improve coherent detection performance.

The communication terminal apparatus of the present invention allows the channel condition of another channel to be estimated without adding a new demodulation system as the one described above by using a plurality of demodulation systems (correlators and channel estimation circuits) for soft handover and RAKE combining generally provided for a CDMA cellular radio transmission apparatus and switching them according to the situation.

The present invention is applicable without particular limitations to any system using transmission diversity as long as it comprises a plurality of antennas, transmits control channel signals from all antennas and transmits communication channels from a selected antenna.

The communication terminal apparatus of the present invention is suitable for a mobile station in a CDMA radio communication system. This allows the CDMA radio communication system to comprise a communication terminal apparatus with high channel estimation performance, making it possible to improve coherent detection performance and improve the quality of communications between systems.

The channel estimating operation in the communication terminal apparatus may be realize by software.

As shown above, when the base station is equipped with a plurality of antennas, the communication terminal apparatus and radio communication method of the present invention carry out transmission diversity in such a way that control channel signals are sent from all antennas and a communication channel signal is sent from a selected antenna and combine the channel estimated value of the control channel signal and the channel estimated value of the communication channel signal after estimating a transmission antenna, improving thus the channel estimation performance. This makes it possible to improve the coherent detection performance in the communication terminal apparatus.

The present invention is not limited to the above described embodiments, and various variations and modifications may be possible without departing from the scope of the present invention.

This application is based on the Japanese Patent Application No.HEI 10-320758 filed on November 11, 1998, entire content of which is expressly incorporated by reference herein.

**Claims**

1.   A communication terminal apparatus comprising:

   a first channel estimator(104,105) that obtains a first estimated value by extracting a known reference signal in a control channel from signals transmitted from a plurality of antennas and estimating their respective channel conditions;
   a second channel estimator(106) that obtains a second estimated value by estimating channel conditions of a communication channel signal from signals transmitted from a plurality of antennas;
   an antenna estimator(108) that estimates the antenna that sent said communication channel signal from said plurality of antennas using said first and second estimated values; and
   a combiner(109) that obtains a combined estimated value by combining the first estimated value and second estimated value about the estimated antenna.

2.   The communication terminal apparatus according to claim 1, wherein the antenna estimator(108) comprises an calculator that finds a plurality of differences between said first estimated value and said second estimated value;

   a comparator(202) that compares a plurality of estimated value differences; and
   a determinator(203) that performs threshold determination on the comparison result.

3.   The communication terminal apparatus according to claim 2, wherein, if said comparison result is not more than the predetermined threshold, the determinator(203) instructs not to perform antenna estimation.

4.   The communication terminal apparatus according to claim 2, wherein, if said comparison result exceeds the predetermined threshold, the determination circuit instructs to perform antenna estimation.

5.   The communication terminal apparatus according to claim 1, further comprising:

   a weighting calculator(204) that calculates weighting factors to be multiplied on the first and second estimated values based on the first and second estimated values and the determination result about antenna estimation.

6.   A communication terminal apparatus comprising:

   a first channel estimator(104,105) that obtains a first estimated value by extracting a known reference signal in a control channel from signals transmitted from a plurality of antennas and estimating their respective channel conditions;
   a second channel estimator(106) that obtains a second estimated value by estimating channel conditions of a communication channel signal from signals transmitted from a plurality of antennas;
   a transmitter that transmits a control signal to request for switching the antenna for transmitting said communication channel signal;
   an antenna estimator(108) that estimates the antenna that sent said communication channel signal from said plurality of antennas using said first and second estimated values; and
   a combiner(109) that obtains a combined estimated value by combining the first estimated value and second estimated value about the estimated antenna.

7.   A base station apparatus carrying out a radio communication with a communication terminal apparatus, said communication terminal apparatus comprising:

   a first channel estimator(104,105) that obtains a first estimated value by extracting a known reference signal in a control channel from signals transmitted from a plurality of antennas and estimating their respective channel conditions;
   a second channel estimator(106) that obtains a second estimated value by estimating channel conditions of a communication channel signal from signals transmitted from a plurality of antennas;

an antenna estimator(108) that estimates the antenna that sent said communication channel signal from said plurality of antennas using said first and second estimated values; and

a combiner(109) that obtains a combined estimated value by combining the first estimated value and second estimated value about the estimated antenna.

8. A radio communication method comprising:

the first channel estimating step of obtaining a first estimated value by extracting a known reference signal in a control channel from signals transmitted from a plurality of antennas and estimating their respective channel conditions;

the second channel estimating step of obtaining a second estimated value by estimating channel conditions of a communication signal from signals transmitted from a plurality of antennas;

the antenna estimating step of estimating the antenna that sent said communication channel signal from said plurality of antennas using said first and second estimated values; and

the combining step of obtaining a combined estimated value by combining the first estimated value and second estimated value about the estimated antenna.

9. The radio communication method according to claim 8, wherein the antenna estimating step comprises:

the operating step of obtaining a plurality of differences between said first estimated value and said second estimated value;

the comparing step of comparing a plurality of differences between estimated values; and

the determining step of performing threshold determination on the comparison result.

10. The radio communication method according to claim 8, further comprising the weighting operating step of calculating weighting factors to be multiplied on the first and second estimated values based on the first and second estimated values and the determination result about antenna estimation.

11. A radio communication method comprising:

the first channel estimating step of obtaining a first estimated value by extracting a known reference signal in a control channel from signals transmitted from a plurality of antennas and estimating their respective channel conditions;

the second channel-estimating step of obtaining a second estimated value by estimating channel conditions of a communication signal from signals transmitted from a plurality of antennas;

the transmitting step of transmitting a control signal to request for switching the antenna for transmitting said communication channel signal;

the antenna estimating step of estimating the antenna that sent said communication channel signal from said plurality of antennas using said first and second estimated values; and

the combining step of obtaining a combined estimated value by combining the first estimated value and second estimated value about the estimated antenna.

PRIOR ART

FIG. 1

EP 1 001 558 A2

FIG. 2

EP 1 001 558 A2

FIG. 3

FIG. 4

FIG. 5A

FIG. 5B

FIG. 5C

A

B

501 502 501 502 502 501 502

501 502

FIG. 6

FIG. 7

EP 1 001 558 A2